# EUROPEAN PATENT SPECIFICATION

(11) **EP 3 788 516 B1**
(45) Date of publication and mention of the grant of the patent: **12.02.2025**
(21) Application number: 19793424.3
(22) Date of filing: 24.04.2019
(51) Int. Cl.: H04L 9/08, G06F 21/00

(54) **ENCRYPTION CARD, ELECTRONIC DEVICE, AND ENCRYPTION SERVICE METHOD**
VERSCHLÜSSELUNGSKARTE, ELEKTRONISCHE VORRICHTUNG UND VERSCHLÜSSELUNGSDIENSTVERFAHREN
CARTE DE CHIFFREMENT, DISPOSITIF ÉLECTRONIQUE ET PROCÉDÉ DE SERVICE DE CHIFFREMENT

(30) Priority: 28.04.2018 CN 201810404346
(43) Date of publication of application: 10.03.2021
(73) Proprietor: ALIBABA GROUP HOLDING LIMITED, George Town, Grand Cayman (KY)
(72) Inventor: FU, Yingfang, Hangzhou, 311121 (CN); XIAO, Peng, Hangzhou, 311121 (CN)
(74) Representative: Patentgruppen A/S
(86) International application number: PCT/US2019/028989
(87) International publication number: WO 2019/209997

(56) References cited:
- US-A1- 2008 005 586
- US-A1- 2008 005 586
- US-A1- 2010 023 747
- US-A1- 2014 068 766

## Description

### Technical Field

The present disclosure relates to the field of computer information security, and particularly to encryption cards, electronic devices, and encryption service methods.

### Background

With the rapid development of the Internet and the continuous improvement of the degree of informatization, information security issues have become increasingly prominent. Ensuring the security of information systems has become a concern of the entire society. Since a possibility of leakage or interception, eavesdropping, falsification and forging of information data exists during storage, processing and exchange thereof, encryption and decryption of the information data are needed in a process of transmission or a process of storage of an information system.

In existing technologies, a high-speed encryption card or a trusted chip that is applicable to a variety of types of password security application systems is generally used for high-speed cryptographic operations, thereby satisfying the encryption/decryption requirements of application system data. However, existing encryption cards or trusted chips have certain problems, e.g., failures in efficiently and quickly encrypting and decrypting information data, difficulties of meeting the computing power and storage capacity requirements of application system data, and failures in effectively guaranteeing the security of platforms and systems and the calculation security of the information data.

US 2008/0005586 A1 discloses a solution to achieve on-chip data path security for system-on-a-chip (SOC) devices. US 2010/0023747 A1 discloses a solution to provide additional storage space in a smart card.

With respect to the above problems, no effective solution has been proposed yet.

### Summary

This Summary is provided to introduce a selection of concepts in a simplified form that are further described below in the Detailed Description. This Summary is not intended to identify all key features or essential features of the claimed subject matter, nor is it intended to be used alone as an aid in determining the scope of the claimed subject matter. The term "techniques," for instance, may refer to device(s), system(s), method(s) and/or processor-readable/computer-readable instructions as permitted by the context above and throughout the present disclosure.

The invention relates to an encryption card and a method according to the appended set of claims.

Embodiments of the present disclosure provide an encryption card, an electronic device, and an encryption service method, so as to at least solve the technical problems that the computing power and the storage capacity of an encryption card in the existing technologies are insufficient, and the calculation security of information data cannot be effectively guaranteed.

According to the embodiments of the present disclosure, an encryption card is provided, which includes a trusted computing module; a programmable logic device that is connected to the trusted computing module through a conductive circuit, and communicates with the trusted computing module through the conductive circuit; and a communication interface that is connected to the trusted computing module and the programmable logic device, and is configured to provide an interface for connecting to an external device of the encryption card.

According to the embodiments of the present disclosure, an encryption card is further provided, which includes a trusted computing module that is disposed in a printed circuit board PCB; a programmable logic device that is disposed in the PCB, and is directly connected to the trusted computing module through wires in the PCB; and a communication interface that is connected to the trusted computing module and the programmable logic device and is configured to provide an interface for connecting to an external device of the encryption card.

According to the embodiments of the present disclosure, an encryption card is further provided, which includes a trusted computing module and a programmable logic device, wherein: the trusted computing module is disposed in a printed circuit board PCB, a storage area of the trusted computing module including a storage area used for storing a cryptographic operation firmware used by the programmable logic device, the programmable logic device is disposed in the PCB, and is directly connected to the trusted computing module through wires in the PCB.

According to the embodiments of the present disclosure, an electronic device including any of the foregoing encryption cards is also provided.

According to the embodiments of the present disclosure, an encryption service method is also provided, which includes receiving an encryption request of a client; inputting the encryption request into an encryption card; receiving an output of the encryption card; and returning the output to the client.

In the embodiments of the present disclosure, a method of integrating a trusted computing module with a programmable logic device is used. By using the trusted computing module, the programmable logic device is connected to the trusted computing module through a conductive circuit and communicates with the trusted computing module through the conductive circuit. A communication interface that is connected to the trusted computing module and the programmable logic device is configured to provide an interface for connecting with an external device of an encryption card, thereby achieving the purposes of improving the computing capability and the storage capability of the encryption card, and ensuring the computational security of information data. As such, the technical effects of effectively securing computer information is achieved, thereby solving the technical problems that the computing power and the storage capacity of encryption cards are insufficient, and the calculation security of information data cannot be effectively guaranteed in the existing technologies.

### Brief Description of the Drawings

The accompanying drawings described herein are intended to provide a further understanding of the present disclosure, and form a part of the present disclosure. Illustrative embodiments of the present disclosure and descriptions thereof are used for describing the present disclosure and are not construed as improper limitations to the present disclosure. In the drawings:
FIG. 1 is a schematic structural diagram of an encryption card 100 in accordance with the embodiments of the present disclosure.
FIG. 2 is a schematic structural diagram of an optional encryption card in accordance with the embodiments of the present disclosure.
FIG. 3 is a schematic diagram of a connection structure between an optional encryption card and an external device in accordance with the embodiments of the present disclosure.
FIG. 4 is a schematic structural diagram of an optional trusted computing module in accordance with the embodiments of the present disclosure.
FIG. 5 is a schematic structural diagram of an optional programmable logic device in accordance with the embodiments of the present disclosure.
FIG. 6 is a schematic structural diagram of another encryption card in accordance with the embodiments of the present disclosure.
FIG. 7 is a schematic structural diagram of still another encryption card in accordance with the embodiments of the present disclosure.
FIG. 8 is a block diagram showing a hardware structure of a computer terminal (or a mobile device) for implementing an encryption service method in accordance with the embodiments of the present disclosure.
FIG. 9 is a flowchart of an encryption service method in accordance with the embodiments of the present disclosure.
FIG. 10 is a schematic structural diagram of an encryption service apparatus in accordance with the embodiments of the present disclosure.

### Detailed Description

In order to enable one skilled in the art to understand the technical solutions of the present disclosure in a better manner, the technical solutions in the embodiments of the present disclosure are clearly and completely described hereinafter with reference to the accompanying drawings in the embodiments of the present disclosure. Apparently, the described embodiments represent merely some and not all of the embodiments of the present disclosure. Based on these embodiments of the present disclosure, all other embodiments obtained by one of ordinary skill in the art without making any inventive effort shall fall within the scope of protection of the present disclosure.

It should be noted that terms "first", "second", etc., in the specification, claims and drawings of the present disclosure are used for distinguishing similar objects, and are not necessarily used for describing a specific order or sequence. It should be understood that data used in this way may be interchanged whenever appropriate, so that the embodiments of the present disclosure described herein can be implemented in an order other than those illustrated or described herein. In addition, terms "include", "contain", and any variations thereof are intended to cover a non-exclusive inclusion. For example, a process, method, system, product, or device that includes a series of operations or units is not necessarily limited to those operations or units that are explicitly listed, and may include other operations or units that are not explicitly listed or that are inherent to such process, method, product, or device.

First, the following explanations are applicable to some nouns or terms that appear during descriptions of the embodiments of the present disclosure.

Trusted Computing refers to a trusted computing platform that is supported by hardware security modules and is widely used in computing and communication systems for improve the overall security of the systems.

Trusted Platform Control Module/Trusted Platform Module (TPCM/TPM) refers to a security chip that provides integrity and authenticity guarantee for evidence, and is typically bound to a computing platform physically.

Field-Programmable Gate Array (FPGA) refers to a programmable logic device having high performance and low power consumption, and is not a traditional Von Neumann structure. It directly generates circuits for algorithmic calculations, and can be targeted designed based on an algorithm and indicators of the algorithm, having a very high efficiency of execution and computation, and being very suitable for online recognition systems that focus on the efficiency of execution. An application-specific integrated circuit (ASIC) chip is a dedicated chip, which has the highest computational performance and efficiency, but has a long development cycle and a high development cost, being difficult to adapt to the field of current deep learning algorithms that are rapidly developed and renewed.

Trusted high-speed data encryption card (THSDEC) refers to a data encryption card having trusted functions.

Master key refers to a long-term shared secret key between a pair of users, and used as a seed for generating session keys or a key encryption keys, thus achieving distribution and protection of these keys. The distribution of the master key is generally completed through an offline and secure physical channel.

Firmware refers to a program written in an erasable read-only memory (EROM) or an electrically erasable programmable read-only memory. Operations of a specific machine can be implemented according to a standard device driver only through a firmware operating system. For example, an optical drive, a recorder, etc., has an internal firmware.

Root of Trust for Measurement (RTM) refers to a computational engine that reliably performs integrity measurements.

Root of Trust for Storage (RTS) refers to a summary value and sequential calculation engine that accurately records complete measurements, and can save integrity measurements in a log, save keys and data delegated to the Trusted Platform Module (TPM), and manage a small amount of memory, where the stored keys are used for completing decryption and signing operations.

Root of Trust for Reporting (RTR) refers to a trusted entity that precisely and correctly reports information, and reliably reports to a Root of Trust for Storage (RTS) calculation engine.

### First Embodiment

In order to ensure the integrity, confidentiality and security of information data and information systems, high-speed encryption cards or trusted chips that can be applied to various types of password security application systems are commonly used for encryption/decryption in the existing technologies.

For example, high-speed encryption cards in related technologies have greatly improved the performance of cryptographic operations and data compression as compared to traditional data encryption cards. However, the following disadvantages exist: being unable to be reconfigured and failing to satisfy specific customization requirements of a service, failing to satisfy compliance requirements, and failing to guarantee the security of platforms, systems, and their own. For another example, although a PCIe cipher card provided in the related technologies solves the problem of protecting the security of information data to some extent, its calculation capabilities, storage capabilities, and capabilities of ensuring the security of platforms and systems cannot fulfill the requirements of an application system. For another example, although TPM cards and TPCM cards can ensure the protection of sensitivity of information data, and the security of platforms and systems, their cryptographic computing capabilities and storage capabilities cannot meet the high-performance requirements of services. In addition, keys of existing trusted chip cards are presented in a form of a plaintext in the memory, and the security of computations of data cannot be effectively guaranteed.

The existing encryption cards or trusted chips have the foregoing deficiencies. Furthermore, encryption card services have the following requirements. For example, a device carried by an encryption card service needs to ensure the security of a platform and a system thereof; no plaintext of critically sensitive data (such as a key, a certificate, etc.) in the encryption card service is saved in a disk to ensure the security of the sensitive data; the computational security needs to be guaranteed for computations associated with the sensitive data in the encryption card service; a computing power and a storage capacity also need to be ensured for the computations associated with the sensitive data in the encryption card service.

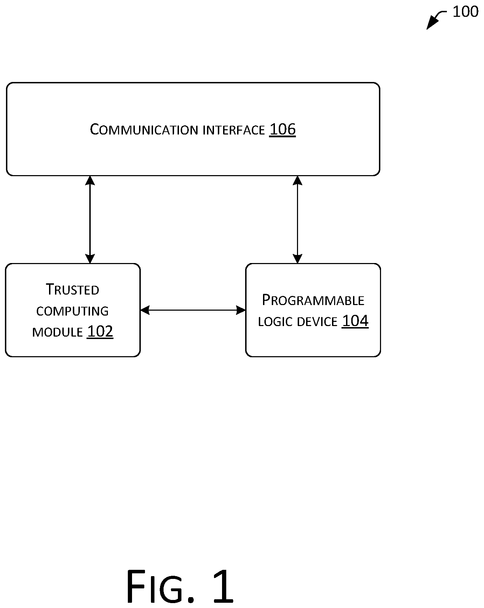

Under the above operating environment, the embodiments of the present disclosure provide an implementation of an encryption card. FIG. 1 is a schematic structural diagram of an encryption card in accordance with the embodiments of the present disclosure. For the sake of description, a structure illustrated therein is only an example of suitable environments, and does not impose any limitations on the scope of uses or functions of the present disclosure. Nor should such encryption card be interpreted as having any dependency or requirement on any one or a combination of components shown in FIG. 1.

It should be noted that the system embodiment provided by the first embodiment of the present disclosure can be widely applied to the Internet, for example, in the field of computer information security, and can be applied to, but not limited to, any sensitive information system, for example, information systems of fields such as finance, communications, electronic commerce, etc.

As shown in FIG. 1, the encryption card includes a trusted computing module 102, a programmable logic device 104, and a communication interface 106, wherein: the programmable logic device 104 is connected to the trusted computing module 102 through a conductive circuit, and communicates with the trusted computing module 102 through the conductive circuit; and the communication interface 106 is connected to the trusted computing module and the programmable logic device, and is configured to provide an interface for connecting to an external device of the encryption card.

It should be noted that the encryption card in the embodiments of the present disclosure may be a trusted high-speed data encryption card having an implementation of a platform trusted boot function from the time of booting to the time of loading an operating system kernel, and can ensure the calculation security of encryption and decryption of sensitive data of a service. In a process of interacting with an external device, the security and validity of each platform and identity can be guaranteed.

In embodiments, the trusted computing module 102 may include, but is not limited to, a trusted platform control module/trusted platform module (TPCM/TPM), etc. The trusted computing module 102 may be a trusted computing chip, for example, a security chip. The programmable logic device 104 may be an FPGA chip. The external device of the encryption card may be a universal component of a motherboard. The encryption card and the external device may be connected through the communication interface 106.

In embodiments, the encryption card may include a housing. The trusted computing module and the programmable logic device are disposed inside the housing. One end of the communication interface is connected to the trusted computing module and the programmable logic device, and another end of the communication interface passes through the housing to enable connections with peripheral devices.

In embodiments, the communication interface includes at least one of the following: a General Purpose Input Output (GPIO), a Serial Peripheral Interface (SPI), an integrated circuit bus (Inter- Integrated Circuit, I2C), a PCIe interface.

In embodiments, the programmable logic device includes a programmable gate array FPGA, and may also include, but is not limited to, an ARM processor integrated display chip/graphics processor (CPU-ARM-GPU).

In embodiments, the trusted computing module, the programmable logic device, and the communication interface are disposed on a printed circuit board PCB, for example, integrated on a printed circuit board PCB of a PCIe card.

In embodiments provided by the present disclosure, the conductive circuit includes an electrical lead disposed on the PCB.

In embodiments, the trusted computing module and the programmable logic device may be connected to each other through, but not limited to, a serial communication interface, and may also directly conduct communications through a conductive circuit inside a printed circuit board card, to implement data interactions without the need of mapping the memory of a host machine (Host) for conducting communications.

It should be noted that, in embodiments of the present disclosure, the trusted computing module and the programming logic device can use a same key management system to facilitate key management and data interaction, being different from the related technologies in which a key management system of a trusted computing module and a key management system of a programmable logic device are independent from each other.

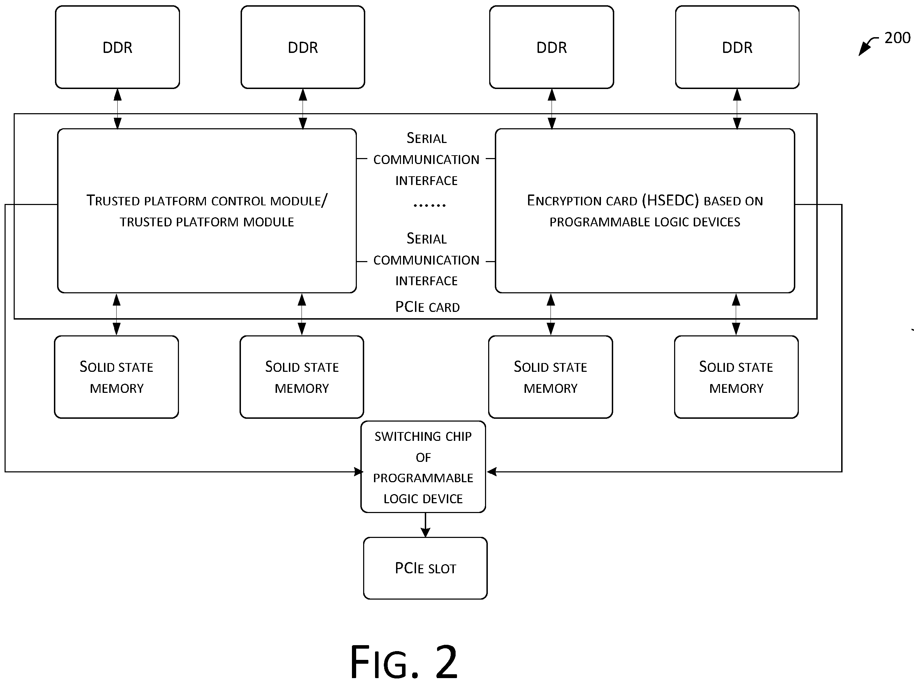

FIG. 2 is a schematic structural diagram of an optional encryption card 200 in accordance with the embodiments of the present disclosure. As shown in FIG. 2, the encryption card 200 includes a trusted platform control module/trusted platform module (i.e., a trusted computing module); a double data rate synchronous dynamic random access memory (DDR) connected to the trusted platform control module/trusted platform module; a solid state memory (Flash) connected to the trusted platform control module/trusted platform module; a data encryption card (HSEDC) that is based on programmable logic devices; a double data rate synchronous dynamic random access memory connected to the data encryption card; and a solid state memory connected to the data encryption card.

It should be noted that, in the embodiments of the present disclosure, the encryption card is compatible with the architecture of the trusted platform control module/trusted platform module, and can achieve technical effects of complying with both situations and requirements.

As shown in FIG. 2, the trusted platform control module/trusted platform module and the data encryption card are integrated in a PCIe card, and the trusted platform control module/trusted platform module and the data encryption card are connected through a serial communication interface (e.g., a serializer/de-serializer, Serdes x8, x8 being a link width), and integrated on a printed circuit board PCB of the PCIe card. The serializer/deserializer is a mainstream time division multiplexing (TDM), point-to-point (P2P) serial communication technology.

In embodiments, as shown in FIG. 2, the encryption card further includes a switching chip (PCIe-Switch) of the programmable logic device. The trusted platform control module/trusted platform module, and the data encryption card are separately connected to the switching chip, and the switching chip is connected to a PCIe slot.

In the foregoing embodiments, the PCIe slot is used as an expansion slot based on a PCI local bus, and may be, but is not limited to, a plug-in graphics card, a sound card, a network card, a USB 2.0 card, an IDE interface card, a TV card, a video capture card, and other types of expansion cards.

It should be noted that the specific structures of the encryption cards shown in FIG. 1 and FIG. 2 in the present disclosure are merely illustrative. In a specific application, an encryption card in the present disclosure may have structure that is more or less than the encryption cards as shown in FIG. 1 and FIG. 2. For example, respective numbers of solid state memory, double rate synchronous dynamic random access memory, serializer/deserializer, etc., that are configured in the encryption card may be, but are not limited to, those shown in FIG. 2, and may be configured according to a specific application scenario.

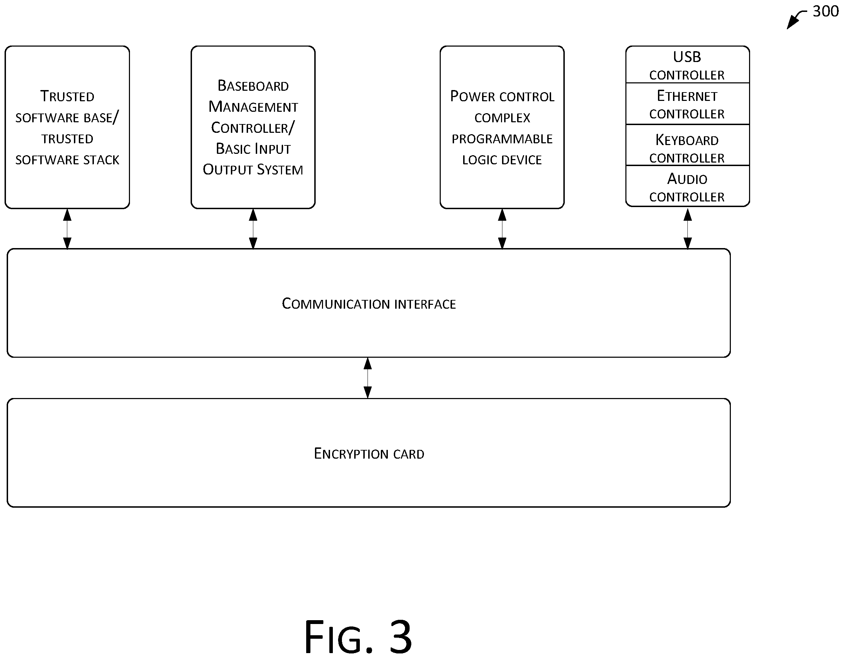

FIG. 3 is a schematic diagram of a connection structure 300 between an optional encryption card and an external device according to the embodiments of the present disclosure. The external device may include a trusted software base (TSB)/trusted software stack (TSS), a substrate management controller/basic input and output system, a power control complex programmable logic device, a universal serial bus (USB) controller, an Ethernet controller, a keyboard controller, an audio controller, as shown in FIG. 3. Still as shown in FIG. 3, the encryption card and the external device can communicate with each other through a communication interface.

In embodiments, the encryption card and the trusted software base/trusted software stack may perform command and data interactions through, but not limited to, a PCIe interface or a serial peripheral interface SPI bus. The trusted software base/trusted software stack can be set in an application (APP) or an operating system (OS) in the external device.

In embodiments, the encryption card may further perform multiplexing for a general purpose input and output (GPIO), a serial peripheral interface (SPI), and an integrated circuit bus (I2C) through a multiplexer, and implement measurements of a Baseboard Management Controller (BMC)/Basic Input Output System (BIOS) in the external device.

In embodiments, the encryption card can also perform multiplexing for a general purpose input and output (GPIO), a serial peripheral interface (SPI), and an integrated circuit bus (I2C) through a multiplexer, and achieve connections with the universal serial bus (USB) controller, the Ethernet controller, the keyboard controller, and the audio controller as described above.

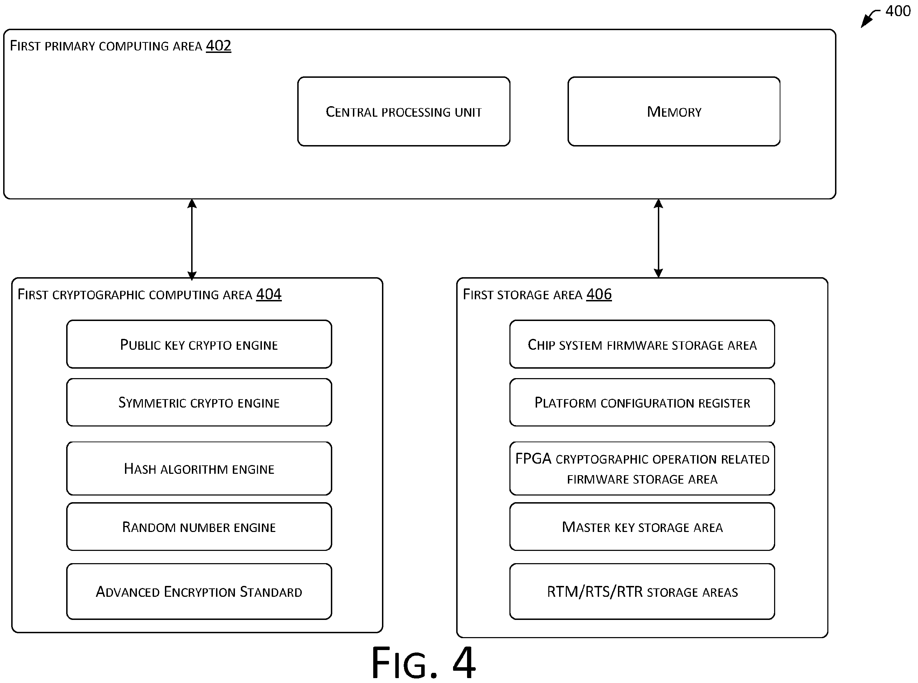

In embodiments, FIG. 4 is a schematic structural diagram of an optional trusted computing module 400 according to the embodiments of the present disclosure. As shown in FIG. 4, the trusted computing module 400 includes a first primary computing area 402, a first cryptographic computing area 404, and a first storage area 406, wherein:
the first primary computing area 402 that is configured to perform operation processes other than cryptographic operation processes;
the first cryptographic computing area 404 that is connected to the first primary computing area 402, is provided with an engine of at least one cryptographic algorithm, and performs a cryptographic operation process using the engine; and
the first storage area 406 that is connected to the first primary computing area 402 and the first cryptographic computing area 404 and is configured to store data.

In embodiments, as shown in FIG. 4, the first primary computing area 402 includes a central processing unit (CPU) and a memory. The first primary computing area 402 can be used to perform operation processes other than cryptographic operation processes. The cryptographic operation process has low requirements on cryptographic computing capability and storage capacity, but has a high security requirement. The first primary computing area can meet higher computing power and storage capacity requirements.

In embodiments, as shown in FIG. 4, the first cryptographic computing area 404 includes an engine of one or more of the following cryptographic algorithms, for example, a public key crypto engine (SM2), a hash algorithm engine (SM3), a symmetric crypto engine (SM4), a random number engine (RSA), Advanced Encryption Standard (AES), etc. The first cryptographic computing area 404 may be used for taking charge of cryptographic operation processes that do not have high cryptographic computing power and storage capacity requirements.

In embodiments, as shown in FIG. 4, the first storage area 406 includes at least one of the following: a chip system firmware storage area, a platform configuration register (PCR), a master key storage area, and a RTM storage area, a RTS storage area, and a RTR storage area.

It should be noted that the master key storage area stores a user key that is used for protecting the programmable logic device. As shown in FIG. 4, a RTM, a RTS, and a RTR may be stored in a same storage area. Alternatively, a RTM storage area, a RTS storage area, and a RTR root storage area may be separately set up, and used for storing the RTM, the RTS, and the RTR.

In embodiments, the foregoing storage areas further include a storage area configured to store cryptographic operation firmware that is used by the programmable logic device, such as an FPGA cryptographic operation related firmware storage area as shown in FIG. 4 which may implement functions including, but not limited to, cryptographic algorithms, interfaces, timing, states, caching, etc.

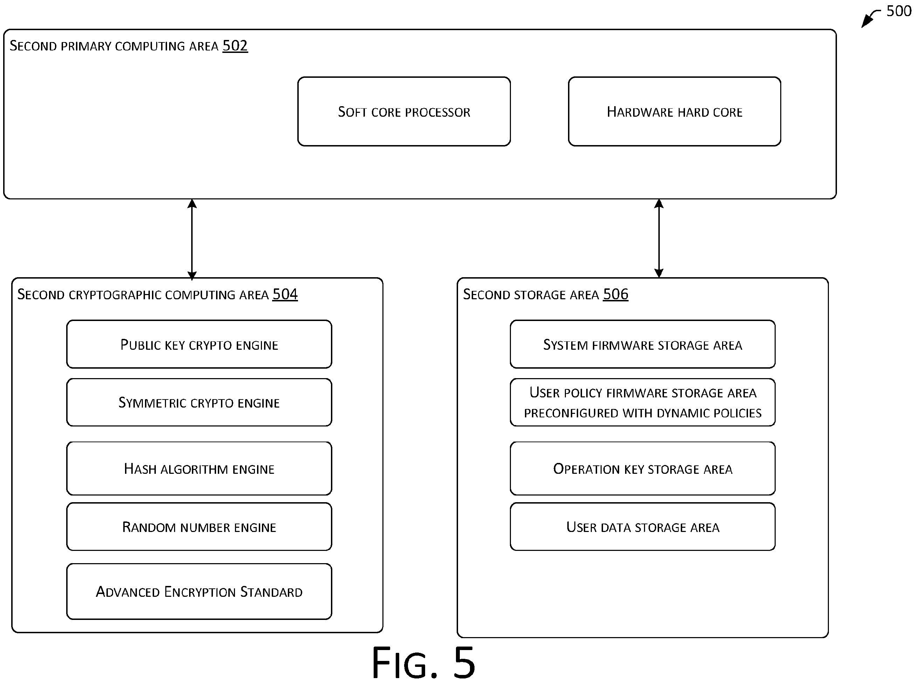

In embodiments, FIG. 5 is a schematic structural diagram of an optional programmable logic device 500 according to the embodiments of the present disclosure. As shown in FIG. 5, the programmable logic device 500 includes a second primary computing area 502, a second cryptographic computing area 504, and a second storage area 506, wherein:
the second primary computing area 502 includes a soft core processor and a hardware hard core of the programmable logic device;
the second cryptographic computing area 504, which is connected to the second main computing area, is provided with an engine of at least one cryptographic algorithm, and performs a cryptographic operation process using the engine; and
the second storage area 506, which is connected to the second primary computing area 502 and the second cryptographic computing area 504, is used for storing data.

In embodiments, the soft core processor may be a NIOS soft core processor, and used for implementing a controller module function. The hardware hard core may be a PCIe hardware hard core, and used for implementing an interface module function, where the hard core can be understood as a special hardware circuit that is solidified inside the programmable logic device.

As still shown in FIG. 5, the second cryptographic computing area 504 includes an engine of one or more of the following cryptographic algorithms: a public key crypto engine (SM2), a hash algorithm engine (SM3), a symmetric crypto engine (SM4), and a random number engine (RSA), International Symmetric Algorithm (AES), etc.

It should be noted that the second cryptographic computing area 404 may be used for performing cryptographic operation processes that have high requirements for cryptographic computing capability and storage capacity.

In embodiments, as shown in FIG. 5, the second storage area 506 includes at least one of the following: a system firmware storage area, a user policy firmware storage area preconfigured with dynamic policies, and an operation key storage area, and a user data storage area.

In the above embodiments, the system firmware storage area may be a static storage area, and the storage area is readable only and not writable. The user policy firmware storage area is readable and writable, and the storage area includes dynamic polic(ies) pre-configured by user(s). The operation key storage area may be used for storing data related to operations such as a user key and a master key calculated by the programmable logic device through a cryptographic operation algorithm. The user data storage area may be used for storing data other than the user key and the master key.

In embodiments, the second cryptographic computing area is configured to select the engine to perform a cryptographic operation process according to a user policy in the user policy firmware storage area.

In embodiments, the second cryptographic computing area is configured to perform verification of data to be loaded according to the RTM in the trusted computing module, and load the data when the verification is passed.

In the embodiments of the present disclosure, in the cryptographic operation process performed by the second cryptographic computing area, cryptographic algorithm requirement(s) of an actual application may be designed according to the user policy of the user firmware dynamic storage area, and the data may be dynamically loaded into the printed circuit board PCB. Before the data is dynamically loaded, the second cryptographic computing area may perform verification of the integrity and validity of the data to be loaded according to the RTM in the trusted computing module, and load the data when the verification is passed.

Based on the foregoing embodiments provided by the present disclosure, a trusted computing module is used. A programmable logic device is connected to the trusted computing module through a conductive circuit, and communicates with the trusted computing module through the conductive circuit. A communication interface is connected to the trusted computing module and the programmable logic device, and is configured to provide an interface for connecting to an external device of an encryption card.

It is easy to note that the present disclosure adopts a method of integrating a trusted computing module with a programmable logic device, and is able to satisfy specific customized requirements of a service through reconfigurable characteristics of the programmable logic device, solving the failures of conventional high-speed encryption cards in guaranteeing the security of platforms and systems, and their integrations of FPGA chips and trusted chips. The high-speed computing capability of the programmable logic device solves the technical problems of insufficient computing power and storage capacity of conventional high-speed encryption cards and trusted chips.

In addition, it should be noted that the programmable logic device and the trusted computing module communicate directly through the conductive circuit inside the printed circuit board PCB, and the loading of the cryptographic algorithm of the programmable logic device is performed through dynamic loading in the printed circuit board PCB, thus effectively verifies its integrity and ensures the computational security of sensitive data.

Through the solutions provided by the foregoing embodiments of the present disclosure, the purposes of improving the computing power and the storage capacity of an encryption card and ensuring the security of information data are achieved, thereby realizing the technical effects of effectively securing computer information, and solving the technical problems that the computing power and the storage capacity of encryption cards are insufficient, and the calculation security of information data cannot be effectively guaranteed in the existing technologies.

### Second Embodiment

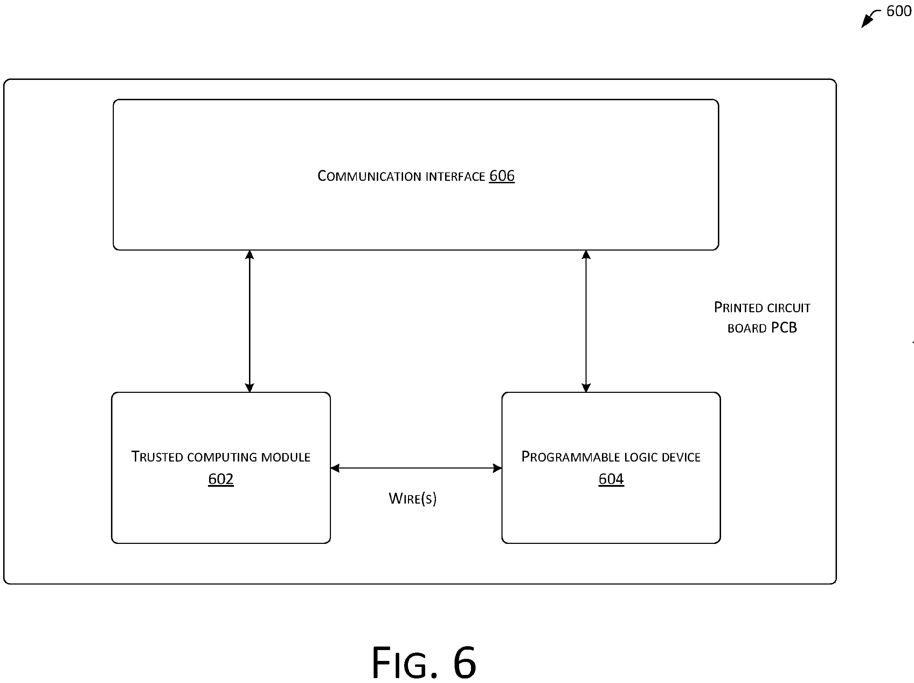

Another embodiment of an encryption card is provided according to the embodiments of the present disclosure. FIG. 6 is a schematic structural diagram of another encryption card 600 according to the embodiments of the present disclosure. For the sake of description, a structure illustrated therein is only an example of suitable environments and does not impose any limitations on the scope of uses or functions of the present disclosure. Nor should the encryption card be interpreted as having any dependency or requirement on any one or a combination of components shown in FIG. 6.

It should be noted that the system embodiment provided by the second embodiment of the present disclosure can be widely applied to the Internet, for example, in the field of computer information security, and can be applied to, but not limited to, any sensitive information system, for example, information systems of fields such as finance, communications, electronic commerce, etc.

As shown in FIG. 6, the encryption card 600 includes a trusted computing module 602, a programmable logic device 604, and a communication interface 606, wherein:
the trusted computing module 602 is disposed in a printed circuit board PCB; the programmable logic device 604 is disposed in the PCB, and is directly connected to the trusted computing module through wire(s) in the PCB; and the communication interface 606 is coupled to the trusted computing module and the programmable logic device described above, and is configured to provide an interface for connecting to an external device of the encryption card.

In embodiments, the wire(s) is/are electrical wire(s) disposed on the PCB.

It should be noted that the programmable logic device and the trusted computing module communicate directly through the wire(s) inside the printed circuit board PCB, and loading of a cryptographic algorithm of the programmable logic device is performed through a dynamic loading in the printed circuit board PCB, thus effectively verifying its integrity and ensuring the security of computations associated with sensitive data.

In embodiments, the trusted computing module and the programmable logic device may be connected to each other through, but not limited to, a serial communication interface, and may also directly communicate with each other through a conductive circuit inside the printed circuit board card, thus implementing data interaction without by mapping memory of a host machine (Host) for conducting communications.

In embodiments, the trusted computing module may include, but is not limited to, a trusted platform control module/trusted platform module (TPCM/TPM), etc. The trusted computing module may be a trusted computing chip, for example, a security chip. The programmable logic device may be an FPGA chip. The external device of the encryption card may be a universal component of a motherboard. The encryption card and the external device may be connected through the communication interface.

In embodiments, the encryption card may include a housing. The trusted computing module and the programmable logic device are disposed inside the housing. One end of the communication interface is connected to the trusted computing module and the programmable logic device, and another end of the communication interface passes through the housing to enable connections with peripheral devices.

In embodiments, the communication interface includes at least one of the following: a General Purpose Input Output (GPIO), a Serial Peripheral Interface (SPI), an integrated circuit bus (Inter- Integrated Circuit, I2C), a PCIe interface.

Based on the foregoing embodiments provided by the present disclosure, a trusted computing module is disposed in a printed circuit board PCB. A programmable logic device is disposed in the PCB, and is directly connected to the trusted computing module through wire(s) in the PCB. A communication interface is coupled to the trusted computing module and the programmable logic device, and is configured to provide an interface for connecting to an external device of an encryption card.

It is easy to note that the present disclosure adopts a method of integrating a trusted computing module with a programmable logic device, and is able to satisfy specific customized requirements of a service through reconfigurable characteristics of the programmable logic device, solving the failures of conventional high-speed encryption cards in guaranteeing the security of platforms and systems, and their integrations of FPGA chips and trusted chips. The high-speed computing capability of the programmable logic device solves the technical problems of insufficient computing power and storage capacity of conventional high-speed encryption cards and trusted chips.

Through the solutions provided by the foregoing embodiments of the present disclosure, the purposes of improving the computing power and the storage capacity of an encryption card and ensuring the security of information data are achieved, thereby realizing the technical effects of effectively securing computer information, and solving the technical problems that the computing power and the storage capacity of encryption cards are insufficient, and the calculation security of information data cannot be effectively guaranteed in the existing technologies.

It should be noted that optional or exemplary implementations of the present embodiment can be referenced to the related description of the first embodiment, and details thereof are not repeatedly described herein.

### Third Embodiment

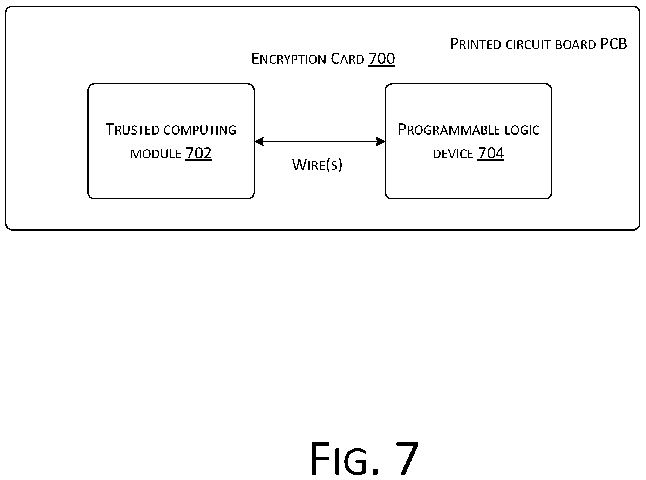

An embodiment of an encryption card is provided according to the embodiments of the present disclosure. FIG. 7 is a schematic structural diagram of another encryption card 700 according to the embodiments of the present disclosure. For the sake of description, a structure illustrated therein is only an example of suitable environments, and does not impose any limitations on the scope of uses or functions of the present disclosure. Nor should the encryption card be interpreted as having any dependency or requirement on any one or a combination of components shown in FIG. 7.

It should be noted that the system embodiment provided by the second embodiment of the present disclosure can be widely applied to the Internet, for example, in the field of computer information security, and can be applied to, but not limited to, any sensitive information system, for example, information systems of fields such as finance, communications, electronic commerce, etc. As shown in FIG. 7, the encryption card 700 includes a trusted computing module 702, and a programmable logic device 704, wherein:
the trusted computing module 702 is disposed in a printed circuit board PCB, and a storage area of the trusted computing module includes a storage area used for storing cryptographic operating firmware used by the programmable logic device; and the programmable logic device 704 is disposed in the PCB, and directly connected to the trusted computing module through wire(s) in the PCB.

In embodiments, the wire(s) is/are electrical wire(s) disposed on the PCB.

It should be noted that the programmable logic device and the trusted computing module communicate directly through the wire(s) inside the printed circuit board PCB, and loading of a cryptographic algorithm of the programmable logic device is performed through a dynamic loading in the printed circuit board PCB, thus effectively verifying its integrity and ensuring the security of computations associated with sensitive data.

In embodiments, the trusted computing module and the programmable logic device are separately provided with a serial communication interface, and can be, but are not limited to, directly connected to the wire(s) through respective serial communication interfaces, and may also directly conduct communications through an conductive circuit of the printed circuit board card to realize data interactions without the need of mapping into memory of a host machine (Host) for conducting communications.

In embodiments, the storage area of the trusted computing module includes at least one of the following: a chip system firmware storage area, a platform configuration register (PCR), a master key storage area, a RTM storage area, a RTS storage area, a RTR root storage area.

In embodiments, the foregoing storage areas further include a storage area configured to store cryptographic operation firmware that is used by the programmable logic device, such as an FPGA cryptographic operation related firmware storage area as shown in FIG. 4 which may implement functions including, but not limited to, cryptographic algorithms, interfaces, timing, states, caching, etc.

Based on the foregoing embodiments provided by the present disclosure, a trusted computing module is disposed in a printed circuit board PCB, and a storage area of the trusted computing module includes a storage area for storing cryptographic operating firmware used by a programmable logic device. The programmable logic device is disposed in the PCB, and is directly connected to the trusted computing module through wire(s) in the PCB.

It is easy to note that the present disclosure adopts a method of integrating a trusted computing module with a programmable logic device, and is able to satisfy specific customized requirements of a service through reconfigurable characteristics of the programmable logic device, solving the failures of conventional high-speed encryption cards in guaranteeing the security of platforms and systems, and their integrations of FPGA chips and trusted chips. The high-speed computing capability of the programmable logic device solves the technical problems of insufficient computing power and storage capacity of conventional high-speed encryption cards and trusted chips.

Through the solutions provided by the foregoing embodiments of the present disclosure, the purposes of improving the computing power and the storage capacity of an encryption card and ensuring the security of information data are achieved, thereby realizing the technical effects of effectively securing computer information, and solving the technical problems that the computing power and the storage capacity of encryption cards are insufficient, and the calculation security of information data cannot be effectively guaranteed in the existing technologies.

It should be noted that the optional or exemplary implementations of the present embodiment can be referred to the related descriptions in the first and second embodiments, and details thereof are not repeatedly described herein.

### Fourth Embodiment

According to the embodiment of the present disclosures, an electronic device is also provided, which includes any one of the above first - third embodiments. An encryption card includes a trusted computing module; a programmable logic device that is connected to the trusted computing module through a conductive circuit and communicates with the trusted computing module through the conductive circuit; a communication interface that is connected to the trusted computing module and the programmable logic device, and configured to provide an interface for connecting to an external device of the encryption card.

In embodiments, the electronic device may be a computing device, a mobile device (for example, a smart phone, an IPAD, a wearable device), or the like.

It should be noted that the optional or exemplary implementations of the present embodiment can be referenced to the related description in the first - third embodiments, and details of are not repeatedly described herein.

### Fifth Embodiment

According to the embodiments of the present disclosure, an embodiment of an encryption service method is also provided. It needs to be noted that operations shown in a flowchart of an accompanying drawing may be executed in a computer system such as a set of computer executable instructions. Moreover, although a logical order is shown in the flowchart, in some cases, the operations shown or described may be performed in a different order than that described herein.

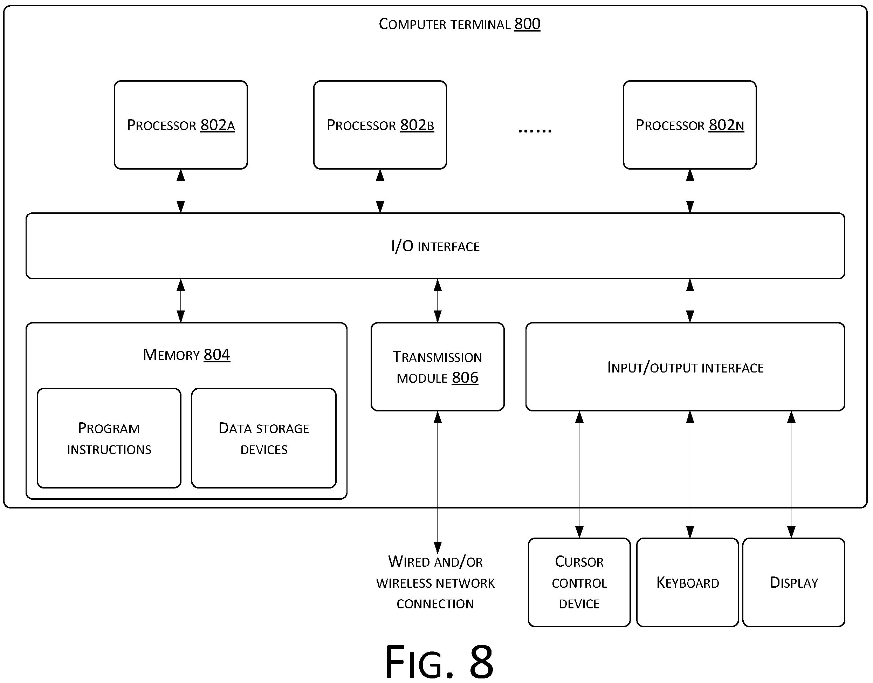

The method embodiment provided by the fifth embodiment of the present disclosure can be executed in a mobile terminal, a computer terminal or the like. FIG. 8 is a block diagram showing a hardware configuration of a computer terminal (or mobile device) for implementing an encryption service method. As shown in FIG. 8, the computer terminal 800 (or the mobile device 800) may include one or more (802a, 802b, ..., 802n are used for illustration in the figure) processors (the processor 802 may include, but is not limited to, a processing device such as a microprocessor MCU or a programmable logic device FPGA), memory 804 used for storing data, and a transmission module 806 used for communication functions. In addition, a display, an input/output interface (I/O interface), a universal serial bus (USB) port (which may be included as one of the ports of the I/O interface), a network interface, a power supply and/or a camera may also be included. One skilled in the art can understand that the structure shown in FIG. 8 is merely illustrative, and does not limit the structure of the electronic device as described above. For example, the computer terminal 800 may also include more or fewer components than those shown in FIG. 8, or have a configuration different from the one shown in FIG. 8.

It should be noted that one or more of the above processors 802 and/or other data processing circuits may generally be referred as "data processing circuits" herein. The data processing circuit may be embodied in whole or in part as software, hardware, firmware or any other combination thereof. Moreover, the data processing circuit can be a single and independent determination module or can be incorporated in whole or in part into any one of other components in computer terminal 800 (or the mobile device). As involved in the embodiments of the present disclosure, the data processing circuit acts as a processor controller (e.g., a selection of a variable resistance terminal path connected to an interface).

The memory 804 can be used to store software programs and modules of application software, such as program instructions/data storage devices corresponding to the encryption service method in the embodiments of the present disclosure, and the processor 802 runs software program(s) and module(s) stored in the memory 804, thereby performing various types of functional applications and data processing, i.e., implementing the encryption service method of the above application program. The memory 804 may include high speed random access memory, and may also include non-volatile memory, such as one or more magnetic storage devices, flash memory, or other non-volatile solid state memory. In some examples, the memory 804 can further include storage devices located remotely relative to the processor 802. These storage devices can be connected to the computer terminal 800 over a network. Examples of such the network include, but are not limited to, the Internet, an intranet, a local area network, a mobile communication network, and a combination thereof.

The transmission device 806 is used for receiving or transmitting data via a network. Specific examples of the network may include a wireless network provided by a communication provider of the computer terminal 800. In an example, the transmission device 806 includes a network interface controller (NIC) that can be connected to other network devices through a base station and thereby communicates with the Internet. In an example, the transmission device 806 can be a Radio Frequency (RF) module, which is used for communicating with the Internet wirelessly.

The display can be, for example, a touch screen liquid crystal display (LCD) that enables a user to interact with a user interface of the computer terminal 800 (or the mobile device).

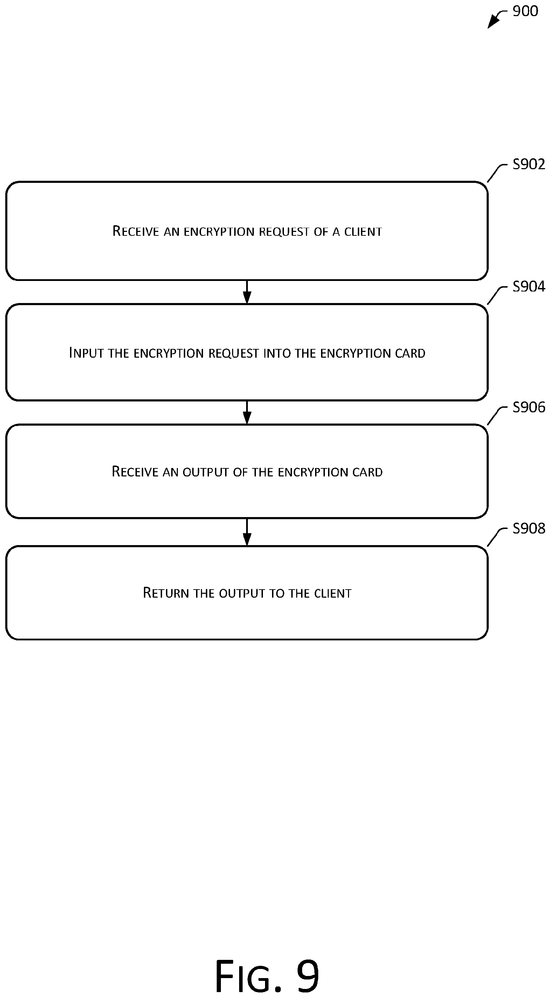

In the above operating environment, the present disclosure provides an encryption service method as shown in FIG. 9. FIG. 9 is a flowchart of an encryption service method according to the embodiments of the present disclosure. As shown in FIG. 9, the encryption service method provided by the embodiments of the present disclosure may be implemented by the following method operations.

Operation S902: Receive an encryption request of a client.

Operation S904: Input the encryption request into the encryption card.

In embodiments, the encryption card may be any one of the encryption cards of the foregoing second embodiment.

Operation S906: Receive an output of the encryption card.

Operation S908: Return the output to the client.

In the above operations S902 - S908, an execution entity may be a communication interface, for example, any one of the above first - fourth embodiments of the present disclosure.

In embodiments, the communication interface includes at least one of the following: a General Purpose Input Output (GPIO), a Serial Peripheral Interface (SPI), and an integrated circuit bus (Inter- Integrated Circuit, I2C), and a PCIe interface.

In embodiments, the encryption card may be any one of the foregoing first - fourth embodiments of the present disclosure. The client may be a client in an external device, and the external device may be the external device of any of the above first - fourth embodiments of the present disclosure.

It should be noted that the method embodiment provided by the embodiments of the present disclosure can be widely applied to the Internet, for example, in the field of computer information security, and can be applied to, but not limited to, any sensitive information system, for example, information systems of fields such as finance, communications, electronic commerce, etc.

It should be noted that the encryption card in the embodiments of the present disclosure may be a trusted high-speed data encryption card having an implementation of a platform trusted boot function from the time of booting to the time of loading an operating system kernel, and can ensure the calculation security of encryption and decryption of sensitive data of a service. In a process of interacting with an external device, the security and validity of each platform and identity can be guaranteed.

In embodiments, the encryption card may include a housing. The trusted computing module and the programmable logic device are disposed inside the housing. One end of the communication interface is connected to the trusted computing module and the programmable logic device, and another end of the communication interface passes through the housing to enable connections with peripheral devices.

Based on the above embodiments provided by the present disclosure, an encryption request is received by a client. The encryption request is input to an encryption card. An output of the encryption card is received, and the output is fed back to the client.

Through the solutions provided by the foregoing embodiments of the present disclosure, the purposes of improving the computing power and the storage capacity of an encryption card and ensuring the security of information data are achieved, thereby realizing the technical effects of effectively securing computer information, and solving the technical problems that the computing power and the storage capacity of encryption cards are insufficient, and the calculation security of information data cannot be effectively guaranteed in the existing technologies.

It should be noted that, for the foregoing method embodiments are all expressed as a series of action combinations for the sake of description. However, one skilled in the art should understand that the present disclosure is not limited by the described orders of actions. Since certain operations may be performed in other orders or in parallel in accordance with the present disclosure. Furthermore, one skilled in the art should also understand that the embodiments described in the specification are all exemplary implementations, and actions and modules involved therein may not be necessarily required by the present disclosure.

Through the description of the above embodiments, one skilled in the art can clearly understand that the methods according to the above embodiments can be implemented by means of software plus a necessary general hardware platform, and apparently by hardware. However, in many cases, the former is a better implementation. Based on such understanding, the essence of the technical solutions of the present disclosure or the portions that make contribution to the existing technologies may be embodied in a form of a software product. The computer software product is stored in a storage media (such as ROM/RAM, a magnetic disk, an optical disc), and includes a plurality of instructions to cause a terminal device (which may be a mobile phone, a computer, a server, or a network device, etc.) to perform the foregoing methods of various embodiments of the present disclosure.

It should be noted that the optional or exemplary implementations of the present embodiment can be referenced to the related descriptions of the first - fourth embodiments, and details thereof are not repeatedly described herein.

### Sixth Embodiment

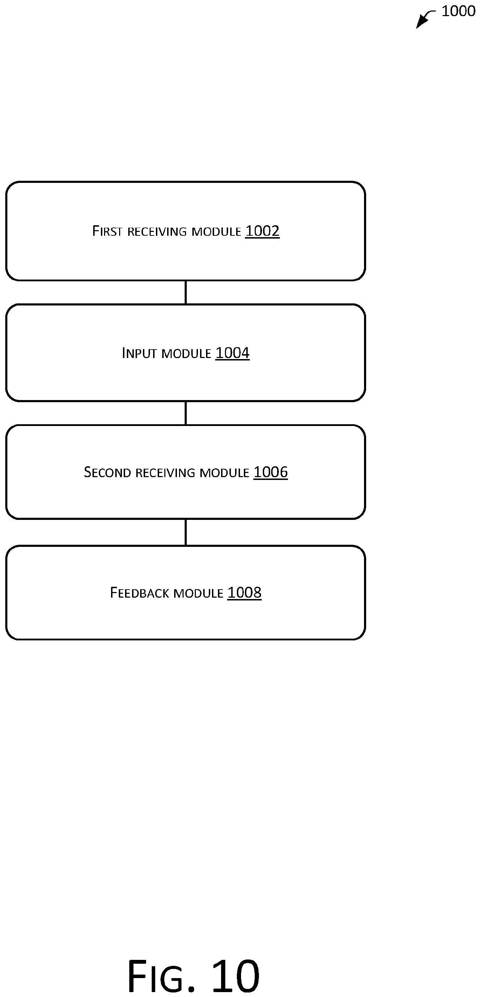

According to the embodiments of the present disclosure, an apparatus for implementing the foregoing encryption service method is further provided. FIG. 10 is a schematic structural diagram of an encryption service apparatus 1000 according to the embodiments of the present disclosure. As shown in FIG. 10, the apparatus 1000 includes a receiving module 1002, an input module 1004, a second receiving module 1006, and a feedback module 1008, wherein:
the first receiving module 1002 is configured to receive an encryption request of a client; the input module 1004 is configured to input the encryption request into an encryption card; the second receiving module 1006 is configured to receive an output of the encryption card; and the feedback module 1008 is configured to return the output to the client.

It should be noted that the first receiving module 1002, the input module 1004, the second receiving module 1006, and the feedback module 1008 correspond to operations S902 to S908 in the fifth embodiment, and these four modules have same examples and application scenarios implemented by corresponding operations, but are not limited to the content disclosed in the fifth embodiment. It should be noted that the above modules, which act as components of the apparatus, can be operated in the computer terminal 800 provided in the fifth embodiment.

It should be noted that the exemplary implementations of the present embodiment can be referenced to the related descriptions in the first - fifth embodiments, and details thereof are not repeatedly described herein.

### Seventh Embodiment

The embodiments of the present disclosure may provide a computer terminal. The computer terminal may be any computer terminal of a computer terminal group. In embodiments, in the present embodiment, the computer terminal may also be replaced by a terminal device such as a mobile terminal, etc.

In embodiments, in the present embodiment, the computer terminal may be located in at least one network device of a plurality of network devices of a computer network.

The method embodiments provided by the fifth embodiments of the present disclosure can be executed in a mobile terminal, a computer terminal or the like.

It should be noted that, in some embodiments, the computer terminal 800 shown in FIG. 8 above may include hardware components (including circuits), software components (including computer codes stored on a computer readable media), or a combination of both hardware and software components. It should be noted that FIG. 8 is only an example of a specific embodiment, and is intended to show types of components that may be present in the computer terminal 800 described above.

In the present embodiment, the computer terminal may execute program codes of the following operations in an encryption service method of an application program: receiving an encryption request of a client; inputting the encryption request into an encryption card; receiving an output of the encryption card; returning the output to the client.

In embodiments, a processor in the computer terminal may execute the following program codes: receiving an encryption request of a client; inputting an encryption request into an encryption card; receiving an output of the encryption card; and returning the output to the client.

Using the embodiments of the present disclosure, a solution of an encryption service is provided. An encryption request of a client is received. The encryption request is inputted into an encryption card. An output of the encryption card is received. The output is fed back to the client, thereby achieving the purposes of improving the computing power and storage capacity of the encryption card, and ensuring the computational security of information data. Accordingly, the technical problems of insufficient computing power and storage capacity of the encryption card, and failures in effectively guaranteeing the computational security of the information data in the existing technologies are resolved.

One skilled in the art can understand that the structure shown in FIG. 8 is only an illustration, and the computer terminal can also be a terminal device, such as a smart phone (such as an Android mobile phone, an iOS mobile phone, etc.), a tablet computer, a handheld computer, and a mobile Internet device (Mobile Internet Devices, MID), a PAD, etc. FIG. 8 does not limit the structure of the above electronic device. For example, the computer terminal 800 may also include more or fewer components (such as a network interface, a display device, etc.) than those shown in FIG. 8, or have a configuration different from the one shown in FIG. 8.

One of ordinary skill in the art may understand that all or part of the operations of the foregoing embodiments may be completed by a program that instructs related hardware of a terminal device, and the program may be stored in a computer readable storage media. The storage media may include a flash disk, read-only memory (ROM), random access memory (RAM), a magnetic disk, or an optical disk.

### Eighth Embodiment

The embodiments of the present disclosure also provide a storage media. In embodiments, in the present embodiment, the storage media may be configured to store program codes executed by the encryption service method provided in the fifth embodiment.

In embodiments, in the present embodiment, the storage media may be located in any computer terminal of a computer terminal group in a computer network, or in any mobile terminal of a mobile terminal group.

In embodiments, in the present embodiment, the storage media is configured to store program codes for performing the following operations: receiving an encryption request of a client; inputting the encryption request into an encryption card; receiving an output of the encryption card; and returning the output to the client.

Serial numbers of the embodiments of the present disclosure are merely used for description, and do not represent advantages and disadvantages of the embodiments.

In the foregoing embodiments of the present disclosure, emphases of various embodiments are different, and portions that are not detailed in a certain embodiment can be referenced to related descriptions of other embodiments.

In a number of embodiments provided by the present disclosure, it should be understood that the disclosed technical content may be implemented in other manners. The apparatus embodiments described above are merely illustrative. For example, a division of unit is only a division of logical functions. In real implementations, other manners of division may exist. For example, multiple units or components may be combined or Integrated into another system, or some features can be ignored or not executed. In addition, mutual coupling or direct coupling or communication connection that is shown or discussed may be an indirect coupling or communication connection through some interfaces, units or modules, and may be in an electrical or other form.

The units described as separate components may or may not be physically separated, and components displayed as units may or may not be physical units, i.e., may be located in a single place, or may be distributed among multiple network units. Some or all of the units may be selected according to actual needs to achieve the purposes of the solutions of the present embodiment.

In addition, various functional units in each embodiment of the present disclosure may be integrated into a single processing unit. Alternatively, each unit may exist as a physical entity separately. Alternatively, two or more units may be integrated into one unit. The above integrated unit may be implemented in a form of hardware or a software functional unit.

The integrated unit, if implemented in a form of a software functional unit and sold or used as a standalone product, may be stored in a computer readable storage media. Based on such understanding, the essence of the technical solutions of the present disclosure or portions that make contributions to the existing technologies may be embodied in a form of a software product. The computer software product is stored in a storage media, and includes a number of instructions to cause a computing device (which may be a personal computer, a server or a network device, etc.) to perform all or part of the operations of the methods described in various embodiments of the present disclosure. The storage media includes a U disk, read-only memory (ROM), random access memory (RAM), a removable hard disk, a magnetic disk, or an optical disk, and the like.

In embodiments, the memory described in the foregoing description may include a form of computer storage media such as a volatile memory, a random access memory (RAM) and/or a non-volatile memory, for example, a read-only memory (ROM) or a flash RAM. The memory is an example of a computer storage media.

The computer storage media may include a volatile or non-volatile type, a removable or non-removable media, which may achieve storage of information using any method or technology. The information may include a computer-readable instruction, a data structure, a program module or other data. Examples of computer storage media include, but not limited to, phase-change memory (PRAM), static random access memory (SRAM), dynamic random access memory (DRAM), other types of random-access memory (RAM), read-only memory (ROM), electronically erasable programmable read-only memory (EEPROM), quick flash memory or other internal storage technology, compact disk read-only memory (CD-ROM), digital versatile disc (DVD) or other optical storage, magnetic cassette tape, magnetic disk storage or other magnetic storage devices, or any other non-transmission media, which may be used to store information that may be accessed by a computing device. As defined herein, the computer storage media does not include transitory media, such as modulated data signals and carrier waves.

The above description is only exemplary implementations of the present disclosure, and it should be noted that one skilled in the art can also make a number of improvements and polishing without departing from the principles of the present disclosure.

## Claims

1. An encryption card (100) comprising:
a trusted computing module (102) including a trusted platform control module TPCM or a trusted platform module TPM;
a programmable logic device (104) that is connected to the trusted computing module (102) through a conductive circuit, and communicates with the trusted computing module (102) through the conductive circuit; and
a communication interface (106) that is connected to the trusted computing module (102) and the programmable logic device (104), and is configured to provide an interface for connecting to an external device of the encryption card;
wherein the trusted computing module (102), the programmable logic device (104), and the communication interface (106) are disposed on a printed circuit board PCB, and the conductive circuit comprises an electrical lead disposed in the PCB;
wherein the trusted computing module (102; 400) comprises:
a first primary computing area (402) that is configured to perform operation processes other than cryptographic operation processes;
a first cryptographic computing area (404) that is connected to the first primary computing area (402), is provided with an engine of at least one cryptographic algorithm, and performs a cryptographic operation process using the engine; and
a first storage area (406) that is connected to the first primary computing area (402) and the first cryptographic computing area (404) and is configured to store data; and
wherein the first storage area (406) further comprises a storage area configured to store cryptographic operation firmware that is used by the programmable logic device (104).

2. The encryption card of claim 1, wherein the programmable logic device (104) is a Field-Programmable Gate Array FPGA.

3. The encryption card of claim 1 or 2, wherein the trusted computing module (102) is a security chip.

4. The encryption card of any of the preceding claims, wherein the trusted computing module (102) and the programmable logic device (104) are configured to use a same key management system to facilitate key management and data interaction.

5. The encryption card of any of the preceding claims, wherein the trusted computing module (102) and the programmable logic device (104) are connected through a serial communication interface.

6. The encryption card of any of the preceding claims, wherein the communication interface (106) comprises at least one of: a General Purpose Input Output GPIO, a Serial Peripheral Interface SPI, an inter-integrated circuit, I2C, and a PCIe interface.

7. The encryption card (100) of any of the preceding claims, wherein the first storage area (406) comprises at least one of: a chip system firmware storage area, a platform configuration register, a master key storage area, and a Root of Trust for Measurement, RTM, storage area, a Root of Trust for Storage, RTS, storage area, and a Root of Trust for Reporting, RTR, storage area, wherein the master key storage area stores a user key that is used for protecting the programmable logic device (104).

8. The encryption card (100) of any of the preceding claims, wherein the programmable logic device (104; 500) comprises:
a second primary computing area (502) comprising a soft core processor and a hardware hard core of the programmable logic device (104; 500);
a second cryptographic computing area (504), which is connected to the second primary computing area (502), being provided with an engine of at least one cryptographic algorithm, and performing a cryptographic operation process using the engine; and
a second storage area (506), which is connected to the second primary computing area (502) and the second cryptographic computing area (504), being used for storing data.

9. The encryption card (100) of claim 8, wherein the second storage area (506) comprises at least one: a system firmware storage area, a user policy firmware storage area preconfigured with dynamic policies, and an operation key storage area, and a user data storage area.

10. The encryption card of claim 8 or 9, wherein the second cryptographic computing area (504) is configured to select the engine to perform a cryptographic operation process according to a user policy in the user policy firmware storage area.

11. The encryption card of any of the claims 8 to 10, wherein the second cryptographic computing area (504) is configured to perform verification of data to be loaded according to a Root of Trust for Measurement, RTM, in the trusted computing module (102; 400), and load the data when the verification is passed.

12. A method for an encryption card implemented by one or more computing devices, the method comprising:
receiving (S902) an encryption request of a client;
inputting (S904) the encryption request into an encryption card (100);
receiving (S906) an output of the encryption card (100); and
returning (S908) the output to the client; and
wherein the encryption card (100) comprises:
a trusted computing module (102) including a trusted platform control module TPCM or a trusted platform module TPM; and
a programmable logic device (104) that is connected to the trusted computing module (102) through a conductive circuit, and communicates with the trusted computing module through the conductive circuit; and
a communication interface (106) that is connected to the trusted computing module (102) and the programmable logic device (104), and is configured to provide an interface for connecting to an external device of the encryption card;
wherein the trusted computing module (102), the programmable logic device (104), and the communication interface (106) are disposed on a printed circuit board PCB, and the conductive circuit comprises an electrical lead disposed in the PCB;
wherein the trusted computing module (102; 400) comprises:
a first primary computing area (402) that is configured to perform operation processes other than cryptographic operation processes;
a first cryptographic computing area (404) that is connected to the first primary computing area (402), is provided with an engine of at least one cryptographic algorithm, and performs a cryptographic operation process using the engine; and
a first storage area (406) that is connected to the first primary computing area (402) and the first cryptographic computing area (404) and is configured to store data; and
wherein the first storage area (406) further comprises a storage area configured to store cryptographic operation firmware that is used by the programmable logic device (104).

13. The method of claim 12, wherein the programmable logic device (104) is a Field-Programmable Gate Array FPGA and/or wherein the trusted computing module (102) is a security chip.

14. The method of claim 12 or 13, wherein the trusted computing module (102) and the programmable logic device (104) uses a same key management system to facilitate key management and data interaction

15. The method of any of the claims 12-14, wherein the trusted computing module (102) and the programmable logic device (104) are connected through a serial communication interface.

## Patentansprüche

1. Verschlüsselungskarte (100), umfassend:
ein vertrauenswürdiges Rechenmodul (102), einschließlich eines vertrauenswürdigen Plattformsteuerungsmoduls TPCM oder eines vertrauenswürdigen Plattformmoduls TPM;
eine programmierbare Logikvorrichtung (104), die mit dem vertrauenswürdigen Rechenmodul (102) durch eine leitfähige Schaltung verbunden ist und mit dem vertrauenswürdigen Rechenmodul (102) durch die leitfähige Schaltung kommuniziert; und
eine Kommunikationsschnittstelle (106), die mit dem vertrauenswürdigen Rechenmodul (102) und der programmierbaren Logikvorrichtung (104) verbunden ist und konfiguriert ist, um eine Schnittstelle zum Verbinden mit einer externen Vorrichtung der Verschlüsselungskarte bereitzustellen;
wobei das vertrauenswürdige Rechenmodul (102), die programmierbare Logikvorrichtung (104) und die Kommunikationsschnittstelle (106) auf einer Leiterplatte PCB angeordnet sind und die leitfähige Schaltung eine elektrische Leitung, die in der PCB angeordnet ist, umfasst;
wobei das vertrauenswürdige Rechenmodul (102; 400) umfasst:
einen ersten primären Rechenbereich (402), der konfiguriert ist, um andere Betriebsvorgänge als kryptografische Betriebsvorgänge durchzuführen;
wobei ein erster kryptografischer Rechenbereich (404), der mit dem ersten primären Rechenbereich (402) verbunden ist, mit einer Engine für mindestens einen kryptografischen Algorithmus versehen ist und einen kryptografischen Betriebsvorgang unter Verwendung der Engine durchführt; und
einen ersten Speicherbereich (406), der mit dem ersten primären Rechenbereich (402) und dem ersten kryptografischen Rechenbereich (404) verbunden ist und konfiguriert ist, um Daten zu speichern; und
wobei der erste Speicherbereich (406) ferner einen Speicherbereich umfasst, der konfiguriert ist, um Firmware für den kryptografischen Betrieb zu speichern, die durch die programmierbare Logikvorrichtung (104) verwendet wird.

2. Verschlüsselungskarte nach Anspruch 1, wobei die programmierbare Logikvorrichtung (104) ein feldprogrammierbares Gate-Array FPGA ist.

3. Verschlüsselungskarte nach Anspruch 1 oder 2, wobei das vertrauenswürdige Rechenmodul (102) ein Sicherheitschip ist.

4. Verschlüsselungskarte nach einem der vorstehenden Ansprüche, wobei das vertrauenswürdige Rechenmodul (102) und die programmierbare Logikvorrichtung (104) konfiguriert sind, um dasselbe Schlüsselverwaltungssystem zu verwenden, um die Schlüsselverwaltung und Dateninteraktion zu ermöglichen.

5. Verschlüsselungskarte nach einem der vorstehenden Ansprüche, wobei das vertrauenswürdige Rechenmodul (102) und die programmierbare Logikvorrichtung (104) durch eine serielle Kommunikationsschnittstelle verbunden sind.

6. Verschlüsselungskarte nach einem der vorstehenden Ansprüche, wobei die Kommunikationsschnittstelle (106) mindestens eines umfasst von: einer Allzweck-Eingangs-/Ausgangsschnittstelle GPIO, einer seriellen Peripherieschnittstelle SPI, einer interintegrierten Schaltung, I2C und einer PCIe-Schnittstelle.

7. Verschlüsselungskarte (100) nach einem der vorstehenden Ansprüche, wobei der erste Speicherbereich (406) mindestens eines umfasst von: einem Chipsystem-Firmware-Speicherbereich, einem Plattformkonfigurationsregister, einem Hauptschlüsselspeicherbereich und einem Speicherbereich des Vertrauensankers für Messungen, RTM-Speicherbereich, einem Speicherbereich des Vertrauensankers für Speicherungen, RTS-Speicherbereich und einem Speicherbereich des Vertrauensankers für Meldungen, RTR-Speicherbereich, wobei der Hauptschlüsselspeicherbereich einen Benutzerschlüssel speichert, der zum Schützen der programmierbaren Logikvorrichtung (104) verwendet wird.

8. Verschlüsselungskarte (100) nach einem der vorstehenden Ansprüche, wobei die programmierbare Logikvorrichtung (104; 500) umfasst:
einen zweiten primären Rechenbereich (502), umfassend einen Softcore-Prozessor und einen Hardware-Hardcore der programmierbaren Logikvorrichtung (104; 500);
wobei ein zweiter kryptografischer Rechenbereich (504), der mit dem zweiten primären Rechenbereich (502) verbunden ist, mit einer Engine für mindestens einen kryptografischen Algorithmus versehen ist und einen kryptografischen Betriebsvorgang unter Verwendung der Engine durchführt; und
einen zweiten Speicherbereich (506), der mit dem zweiten primären Rechenbereich (502) und dem zweiten kryptographischen Rechenbereich (504) verbunden ist und zum Speichern von Daten verwendet wird.

9. Verschlüsselungskarte (100) nach Anspruch 8, wobei der zweite Speicherbereich (506) mindestens eines umfasst von: einem System-Firmware-Speicherbereich, einem Firmware-Speicherbereich der Benutzerrichtlinie, der mit dynamischen Richtlinien vorkonfiguriert ist, und einem Betriebsschlüsselspeicherbereich und einem Benutzerdatenspeicherbereich.

10. Verschlüsselungskarte nach Anspruch 8 oder 9, wobei der zweite kryptografische Rechenbereich (504) konfiguriert ist, um die Engine auszuwählen, um einen kryptografischen Betriebsvorgang gemäß einer Benutzerrichtlinie in dem Firmware-Speicherbereich der Benutzerrichtlinie durchzuführen.

11. Verschlüsselungskarte nach einem der Ansprüche 8 bis 10, wobei der zweite kryptografische Rechenbereich (504) konfiguriert ist, um eine Verifizierung von zu ladenden Daten, gemäß einem Vertrauensanker für Messungen, RTM, in dem vertrauenswürdigen Rechenmodul (102; 400) durchzuführen und die Daten zu laden, wenn die Verifizierung erfolgreich ist.

12. Verfahren für eine Verschlüsselungskarte, die durch eine oder mehrere Rechenvorrichtungen implementiert wird, das Verfahren umfassend:
Empfangen (S902) einer Verschlüsselungsanforderung eines Clients;
Eingeben (S904) der Verschlüsselungsanforderung in eine Verschlüsselungskarte (100);
Empfangen (S906) einer Ausgabe der Verschlüsselungskarte (100); und
Zurückgeben (S908) der Ausgabe an den Client; und
wobei die Verschlüsselungskarte (100) umfasst:
ein vertrauenswürdiges Rechenmodul (102), einschließlich eines vertrauenswürdigen Plattformsteuerungsmoduls TPCM oder eines vertrauenswürdigen Plattformmoduls TPM; und
eine programmierbare Logikvorrichtung (104), die mit dem vertrauenswürdigen Rechenmodul (102) durch eine leitfähige Schaltung verbunden ist und mit dem vertrauenswürdigen Rechenmodul durch die leitfähige Schaltung kommuniziert; und
eine Kommunikationsschnittstelle (106), die mit dem vertrauenswürdigen Rechenmodul (102) und der programmierbaren Logikvorrichtung (104) verbunden ist und konfiguriert ist, um eine Schnittstelle zum Verbinden mit einer externen Vorrichtung der Verschlüsselungskarte bereitzustellen;
wobei das vertrauenswürdige Rechenmodul (102), die programmierbare Logikvorrichtung (104) und die Kommunikationsschnittstelle (106) auf einer Leiterplatte PCB angeordnet sind und die leitfähige Schaltung eine elektrische Leitung, die in der PCB angeordnet ist, umfasst; wobei das vertrauenswürdige Rechenmodul (102; 400) umfasst:
einen ersten primären Rechenbereich (402), der konfiguriert ist, um andere Betriebsvorgänge als kryptografische Betriebsvorgänge durchzuführen;
wobei ein erster kryptografischer Rechenbereich (404), der mit dem ersten primären Rechenbereich (402) verbunden ist, mit einer Engine für mindestens einen kryptografischen Algorithmus versehen ist und einen kryptografischen Betriebsvorgang unter Verwendung der Engine durchführt; und
einen ersten Speicherbereich (406), der mit dem ersten primären Rechenbereich (402) und dem ersten kryptografischen Rechenbereich (404) verbunden ist und konfiguriert ist, um Daten zu speichern; und
wobei der erste Speicherbereich (406) ferner einen Speicherbereich umfasst, der konfiguriert ist, um Firmware für den kryptografischen Betrieb zu speichern, die durch die programmierbare Logikvorrichtung (104) verwendet wird.

13. Verfahren nach Anspruch 12, wobei die programmierbare Logikvorrichtung (104) ein feldprogrammierbares Gate-Array FPGA ist und/oder wobei das vertrauenswürdige Rechenmodul (102) ein Sicherheitschip ist.

14. Verfahren nach Anspruch 12 oder 13, wobei das vertrauenswürdige Rechenmodul (102) und die programmierbare Logikvorrichtung (104) dasselbe Schlüsselverwaltungssystem verwenden, um die Schlüsselverwaltung und die Dateninteraktion zu ermöglichen.

15. Verfahren nach einem der Ansprüche 12 bis 14, wobei das vertrauenswürdige Rechenmodul (102) und die programmierbare Logikvorrichtung (104) durch eine serielle Kommunikationsschnittstelle verbunden sind.

## Revendications

1. Carte de chiffrement (100) comprenant :
un module informatique de confiance (102) comportant un module de commande de plate-forme de confiance TPCM ou un module de plate-forme de confiance TPM ;
un dispositif logique programmable (104) qui est connecté au module informatique de confiance (102) par un circuit conducteur et qui communique avec le module informatique de confiance (102) par le biais du circuit conducteur ; et
une interface de communication (106) connectée au module informatique de confiance (102) et au dispositif logique programmable (104), et configurée pour fournir une interface de connexion à un dispositif externe de la carte de chiffrement ;
dans laquelle le module informatique de confiance (102), le dispositif logique programmable (104) et l'interface de communication (106) sont disposés sur une carte de circuit imprimé (PCB), et le circuit conducteur comprend un fil électrique disposé dans la PCB ;
dans laquelle le module informatique de confiance (102 ; 400) comprend :
une première zone de calcul primaire (402) configurée pour effectuer des processus d'opération autres que des processus d'opération cryptographique ;
une première zone de calcul cryptographique (404) connectée à la première zone de calcul primaire (402), équipée d'un moteur d'au moins un algorithme cryptographique et exécutant un processus d'opération cryptographique à l'aide du moteur ; et
une première zone de stockage (406) connectée à la première zone de calcul primaire (402) et à la première zone de calcul cryptographique (404) et configurée pour stocker des données ; et
dans laquelle la première zone de stockage (406) comprend en outre une zone de stockage configurée pour stocker un micrologiciel d'opération cryptographique utilisé par le dispositif logique programmable (104).

2. Carte de chiffrement selon la revendication 1, dans laquelle le dispositif logique programmable (104) est une FPGA (Field-Programmable Gate Array - matrice prédiffusée programmable par l'utilisateur).

3. Carte de chiffrement selon la revendication 1 ou 2, dans laquelle le module informatique de confiance (102) est une puce de sécurité.

4. Carte de chiffrement selon l'une quelconque des revendications précédentes, dans laquelle le module informatique de confiance (102) et le dispositif logique programmable (104) sont configurés pour utiliser un même système de gestion des clés afin de faciliter la gestion des clés et l'interaction des données.

5. Carte de chiffrement selon l'une quelconque des revendications précédentes, dans laquelle le module informatique de confiance (102) et le dispositif logique programmable (104) sont connectés par le biais d'une interface de communication série.

6. Carte de chiffrement selon l'une quelconque des revendications précédentes, dans laquelle l'interface de communication (106) comprend au moins l'un parmi : une entrée/sortie à usage général GPIO, une interface périphérique série SPI, un circuit intégré, I2C, et une interface PCIe.

7. Carte de chiffrement (100) selon l'une quelconque des revendications précédentes, dans laquelle la première zone de stockage (406) comprend au moins l'un parmi : une zone de stockage du micrologiciel du système à puce, un registre de configuration de la plate-forme, une zone de stockage de la clé principale et une zone de stockage de la racine de confiance pour la mesure, RTM, une zone de stockage, une racine de confiance pour le stockage, RTS, une zone de stockage, et une racine de confiance pour les rapports, RTR, dans laquelle la zone de stockage de la clé principale stocke une clé d'utilisateur qui est utilisée pour protéger le dispositif logique programmable (104).

8. Carte de chiffrement (100) selon l'une quelconque des revendications précédentes, dans laquelle le dispositif logique programmable (104 ; 500) comprend :
une seconde zone de calcul primaire (502) comprenant un processeur à noyau souple et un noyau dur matériel du dispositif logique programmable (104 ; 500) ;
une seconde zone de calcul cryptographique (504), connectée à la seconde zone de calcul primaire (502), équipée d'un moteur d'au moins un algorithme cryptographique, et exécutant un processus d'opération cryptographique à l'aide du moteur ; et
une seconde zone de stockage (506), connectée à la seconde zone de calcul primaire (502) et à la seconde zone de calcul cryptographique (504), utilisée pour stocker des données.

9. Carte de chiffrement (100) selon la revendication 8, dans laquelle la seconde zone de stockage (506) comprend au moins l'une parmi : une zone de stockage du micrologiciel du système, une zone de stockage du micrologiciel de la politique de l'utilisateur préconfigurée avec des politiques dynamiques, une zone de stockage de la clé d'opération et une zone de stockage des données de l'utilisateur.

10. Carte de chiffrement selon la revendication 8 ou 9, dans laquelle la seconde zone de calcul cryptographique (504) est configurée pour sélectionner le moteur afin d'effectuer un processus d'opération cryptographique en fonction d'une politique de l'utilisateur dans la zone de stockage du micrologiciel de la politique de l'utilisateur.

11. Carte de chiffrement selon l'une quelconque des revendications 8 à 10, dans laquelle la seconde zone de calcul cryptographique (504) est configurée pour effectuer la vérification des données à charger en fonction d'une Racine de confiance pour la mesure, RTM, dans le module de calcul de confiance (102; 400), et charger les données une fois la vérification réussie.

12. Procédé pour une carte de chiffrement mise en œuvre par un ou plusieurs dispositifs informatiques, le procédé comprenant :
la réception (S902) d'une demande de chiffrement d'un client ;
l'introduction (S904) de la demande de chiffrement dans une carte de chiffrement (100) ;
la réception (S906) des données de sortie de la carte de chiffrement (100) ; et
le renvoi (S908) des données de sortie au client ; et
dans lequel la carte de chiffrement (100) comprend :
un module informatique de confiance (102) comportant un module de commande de plate-forme de confiance TPCM ou un module de plate-forme de confiance TPM ; et
un dispositif logique programmable (104) qui est connecté au module informatique de confiance (102) par un circuit conducteur et qui communique avec le module informatique de confiance par le circuit conducteur ; et
une interface de communication (106) connectée au module informatique de confiance (102) et au dispositif logique programmable (104), et configurée pour fournir une interface de connexion à un dispositif externe de la carte de chiffrement ;
dans lequel le module informatique de confiance (102), le dispositif logique programmable (104) et l'interface de communication (106) sont disposés sur une carte de circuit imprimé (PCB), et le circuit conducteur comprend un fil électrique disposé dans la PCB ; dans laquelle le module informatique de confiance (102 ; 400) comprend :
une première zone de calcul primaire (402) configurée pour effectuer des processus opérationnels autres que des processus d'opération cryptographique ;
une première zone de calcul cryptographique (404) connectée à la première zone de calcul primaire (402), équipée d'un moteur d'au moins un algorithme cryptographique et exécutant un processus d'opération cryptographique à l'aide du moteur ; et
une première zone de stockage (406) connectée à la première zone de calcul primaire (402) et à la première zone de calcul cryptographique (404) et configurée pour stocker des données ; et
dans lequel la première zone de stockage (406) comprend en outre une zone de stockage configurée pour stocker un micrologiciel d'opération cryptographique utilisé par le dispositif logique programmable (104).

13. Procédé selon la revendication 12, dans lequel le dispositif logique programmable (104) est une FPGA (Field Programmable Gate Array - matrice prédiffusée programmable par l'utilisateur) et/ou dans lequel le module informatique de confiance (102) est une puce de sécurité.

14. Procédé selon la revendication 12 ou 13, dans lequel le module informatique de confiance (102) et le dispositif logique programmable (104) utilisent un même système de gestion des clés pour faciliter la gestion des clés et l'interaction des données.

15. Procédé selon l'une quelconque des revendications 12 à 14, dans lequel le module informatique de confiance (102) et le dispositif logique programmable (104) sont connectés par le biais d'une interface de communication série.
